# EUROPEAN PATENT SPECIFICATION

(11) **EP 3 078 830 B1**
(45) Date of publication and mention of the grant of the patent: **16.05.2018**
(21) Application number: 16159489.0
(22) Date of filing: 09.03.2016
(51) Int. Cl.: F02B 37/04, F02B 37/18, F02D 41/00, F02D 23/00

(54) **CONTROL APPARATUS FOR AN INTERNAL COMBUSTION ENGINE WITH SUPERCHARGER AND METHOD FOR CONTROLLING THE SUPERCHARGING PRESSURE**
STEUERUNGSVORRICHTUNG FÜR EINE BRENNKRAFTMASCHINE MIT AUFLADUNG UND VERFAHREN ZUR STEUERUNG DES LADEDRUCKS
APPAREIL DE COMMANDE POUR UN MOTEUR À COMBUSTION INTERNE AVEC UN COMPRESSEUR DE SURALIMENTATION ET UN PROCÉDÉ POUR COMMANDER LA PRESSION D'ADMISSION

(30) Priority: 08.04.2015 JP 2015078964
(43) Date of publication of application: 12.10.2016
(73) Proprietor: Bosch Corporation, Tokyo 150-8360 (JP)
(72) Inventor: NAKAMURA, Shigeyoshi, Higashimatsuyama-shi, Saitama 3558603 (JP); GOTO, Junji, Higashimatsuyama-shi, Saitama 3558603 (JP)
(74) Representative: Isarpatent

(56) References cited:
- WO-A1-2014/061208
- US-A1- 2011 023 848
- US-A1- 2011 125 384

## Description

### TECHNICAL FIELD

The present invention relates to a control apparatus for an internal combustion engine with a supercharger installed in a vehicle or the like and a method for controlling the internal combustion engine.

### BACKGROUND ART

A turbocharger type supercharger is widely used to improve the heat efficiency of an internal combustion engine. Such a turbocharger type supercharger has a wastegate valve for bypassing exhaust gas flowing through a turbine, a variable nozzle turbo valve for changing the exhaust gas passing area of the turbine, and the like, which are provided to control the supercharging pressure in the exhaust path, so as to change the workload of the turbine depending on the opening degrees of these valves.

For example, PTL 1 discloses a technique for controlling the supercharging pressure by feeding back the actual supercharging pressure and changing the opening degrees of various types of valves based on the physical expression (physical model) for the supercharger so that the difference from the target supercharging pressure equals zero.

### CITATION LIST

### PATENT LITERATURE

[PTL 1] JP-T-2005-504210
WO 2014/061208 discloses an internal combustion engine being equipped with a fuel cell, a low-pressure-stage turbocharger having a low-pressure-stage turbine and a low-pressure-stage compressor, and a high-pressure-stage turbocharger having a high-pressure-stage turbine and a high-pressure-stage compressor, and being configured such that the air supplied to the fuel cell is extracted from the downstream side of the low-pressure-stage compressor, and the exhaust gas discharged from the fuel cell is supplied to the downstream side of the high-pressure-stage turbine and the upstream side of the low-pressure-stage turbine.

### SUMMARY OF INVENTION

### TECHNICAL PROBLEM

In supercharging pressure control (referred to below as model-based supercharging pressure control) based on a physical model such as that in the supercharging system disclosed in PTL 1, hardware conforming to the central specification can control the supercharging pressure accurately. However, since deviation is caused between actual phenomenon and a physical model due to individual differences or variations in manufacturing, the supercharging pressure may exceed the target supercharging pressure and overshoot significantly enough to possibly cause a hardware failure in model-based supercharging pressure control.

The invention addresses the above problem with an object of providing a control apparatus for an internal combustion engine with a supercharger providing a more accurate and robust control of a supercharger pressure, wherein the control preserves the supercharger..

### SOLUTION TO PROBLEM

The invention has the following means to solve the above problems.

According to a first aspect of the invention, there is provided a control apparatus for an internal combustion engine according to claim 1.

In the above aspect, when the actual supercharging pressure is equal to or more than the target supercharging pressure with the opening degree of the exhaust flow rate regulating valve fully closed, on the assumption that it has been falsely recognized, from the physical model, that the discharging pressure cannot reach the target discharging pressure unless the exhaust flow rate regulating valve is fully closed, the opening degree of the exhaust flow rate regulating valve is changed in the opening direction from the fully closing state to prevent the supercharging pressure from overshooting significantly enough to possibly cause a hardware failure. That is, it is possible to adjust the supercharging pressure to the target supercharging pressure while achieving high robustness that, for example, prevents a hardware failure even when deviation occurs between actual phenomenon and the physical model in an internal combustion engine with a supercharger.

In the first aspect, the supercharging pressure state determination unit determines whether the actual supercharging pressure is equal to or more than the target supercharging pressure with the opening degree of the exhaust flow rate regulating valve put in the fully closing state and an increasing rate at which the actual supercharging pressure increases is more than a threshold, and the valve opening release unit preferably changes the opening degree of the exhaust flow rate regulating valve in the opening direction from the fully closing state when the actual supercharging pressure is equal to or more than the target supercharging pressure with the opening degree of the exhaust flow rate regulating valve put in the fully closing state and the increasing rate at which the actual supercharging pressure increases per unit time is more than a threshold.

In the first aspect, the supercharging pressure state determination unit determines whether the actual supercharging pressure is equal to or more than the target supercharging pressure with the opening degree of the exhaust flow rate regulating valve put in the fully closing state and a difference between the actual supercharging pressure and the target supercharging pressure is more than a threshold and the valve opening release unit may change the opening degree of the exhaust flow rate regulating valve in the opening direction from the fully closing state when the actual supercharging pressure is equal to or more than the target supercharging pressure with the opening degree of the exhaust flow rate regulating valve put in the fully closing state and the difference between the actual supercharging pressure and the target supercharging pressure is more than the threshold.

In the first aspect, the control apparatus for an internal combustion engine with a supercharger may be characterized by further including an internal combustion engine state determination unit determining whether an engine speed and a fuel injection amount of the internal combustion engine are more than thresholds, in which, when the actual supercharging pressure is equal to or more than the target supercharging pressure with the opening degree of the exhaust flow rate regulating valve put in the fully closing state, if the engine speed and the fuel injection amount of the internal combustion engine are more than the thresholds, the opening degree of the exhaust flow rate regulating valve may be changed in the opening direction from the fully closing state.

According to a second aspect of the invention, there is provided a control apparatus for an internal combustion engine according to claim 5.

In the above aspect, when the actual supercharging pressure controlled in the two-stage mode is equal to or more than the target supercharging pressure, on the assumption that it has been falsely recognized, from the physical model, that the supercharging pressure cannot reach the target discharging pressure unless the high pressure stage supercharger works, switching from the two-stage mode to the one-stage mode is forcibly performed to prevent the supercharging pressure from overshooting significantly enough to possibly cause a hardware failure. That is, it is possible to adjust the supercharging pressure to the target supercharging pressure while achieving high robustness that, for example, prevents a hardware failure even when deviation occurs between actual phenomenon and the physical model in an internal combustion engine with a supercharger.

In the second aspect, the supercharging pressure state determination unit may determine whether the actual supercharging pressure controlled in the two-stage mode is equal to or more than the target supercharging pressure and an increasing rate at which the supercharging pressure increases is more than a threshold and the operation mode switching unit may instruct the supercharging pressure control unit to perform switching from the two-stage mode to the one-stage mode when the actual supercharging pressure controlled in the two-stage mode is equal to or more than the target supercharging pressure and the increasing rate at which the actual supercharging pressure increases is more than the threshold.

In the second aspect, the supercharging pressure state determination unit may determine whether the actual supercharging pressure controlled in the two-stage mode is equal to or more than the target supercharging pressure and a difference between the actual supercharging pressure and the target supercharging pressure is more than a threshold and the valve opening release unit may instruct the supercharging pressure control unit to perform switching from the two-stage mode to the one-stage mode when the actual supercharging pressure controlled in the two-stage mode is equal to or more than the target supercharging pressure and the difference between the actual supercharging pressure and the target supercharging pressure is more than the threshold.

In the second aspect, the control apparatus for an internal combustion engine with a supercharger may be characterized by further including an internal combustion engine state determination unit determining whether an engine speed and a fuel injection amount of the internal combustion engine are more than thresholds, in which when the actual supercharging pressure controlled in the two stage mode is equal to or more than the target supercharging pressure, if the engine speed and the fuel injection amount of the internal combustion engine are more than the thresholds, the supercharging pressure control unit may be instructed to perform switching from the two-stage mode to the one-stage mode.

The invention described above can be also interpreted as a method for controlling the internal combustion engine with a supercharger.

### ADVANTAGEOUS EFFECTS OF INVENTION

The internal combustion engine with a supercharger according to the invention has high robustness against deviation between actual phenomenon and the physical model and can adjust the supercharging pressure to the target supercharging pressure.

### BRIEF DESCRIPTION OF DRAWINGS

[Fig. 1] Fig. 1 illustrates the entire structure of an engine control system incorporating a control apparatus for an internal combustion with a supercharger according to the invention.
[Fig. 2] Fig. 2 illustrates a processing unit included in an engine control unit according to a first embodiment.
[Fig. 3] Fig. 3 is a flowchart illustrating a processing flow performed by the engine control unit according to the first embodiment.
[Fig. 4] Fig. 4 illustrates various types of time responses for a comparison example in which a supercharging pressure control unit 110 controls the supercharging pressure by skipping step S306.
[Fig. 5] Fig. 5 illustrates various types of time responses for an example achieved by the processing illustrated in Fig. 3.
[Fig. 6] Fig. 6 illustrates a processing unit included in an engine control unit according to a second embodiment.
[Fig. 7] Fig. 7 is a flowchart illustrating a processing flow performed by the engine control unit according to the second embodiment.
[Fig. 8] Fig. 8 illustrates various types of time responses for a comparison example in which the supercharging pressure control unit 110 controls the supercharging pressure by skipping step S706.
[Fig. 9] Fig. 9 illustrates various types of time responses for an example achieved by the processing illustrated in Fig. 7.

### DESCRIPTION OF EMBODIMENTS

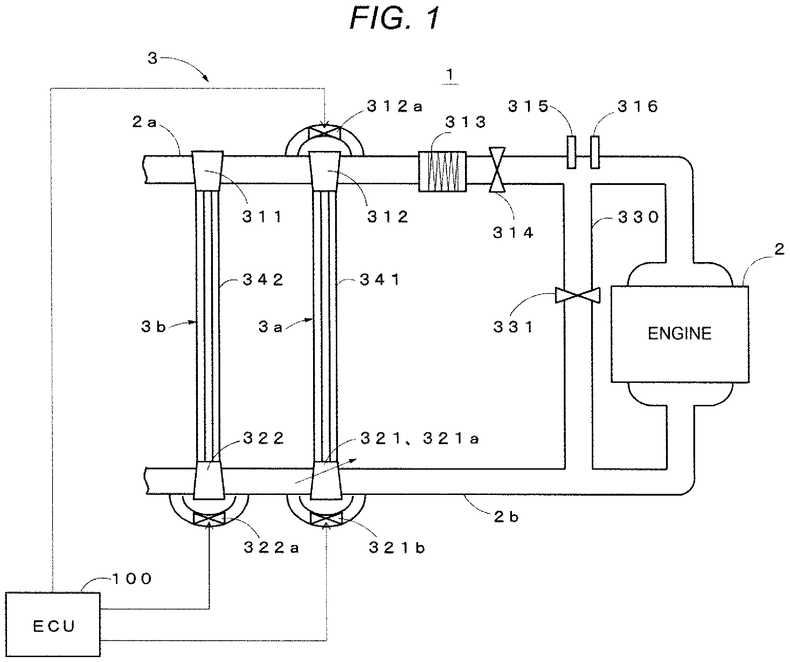

An embodiment of the invention (referred to below as the embodiment) will be described using specific examples. The embodiment relates to a control apparatus for an internal combustion engine with a supercharger to be installed in a vehicle or the like. Specifically, this control apparatus is incorporated in, for example, an engine control system 1 as shown in Fig. 1. Referring to Fig. 1, the structure and operation of the engine control system 1 will be described below focusing on supercharging pressure control for controlling the supercharging pressure of air with which the engine is supercharged.

### 1. Engine control system

The engine control system 1 includes an engine 2, a turbocharger 3, and an engine control unit 100 (referred to below as the ECU 100) as illustrated in Fig. 1.

The engine 2 is an internal combustion engine according to the invention and the engine 2 is a reciprocating engine such as, for example, a diesel engine using diesel fuel as the power source or a gasoline engine using gasoline fuel as the power source. Specifically, the engine 2 generates power by inhaling outside air (air) from an intake pipe 2a, which is an intake path connected to an outside air entrance, and burning fuel, and exhausts exhaust gas generated by combustion to an exhaust pipe 2b, which is an exhaust path. In the following description, the engine 2 is assumed to be a diesel engine.

The turbocharger 3 is a supercharger supercharging the engine 2 with air, and a two-stage turbocharger in which, for example, a high pressure stage turbocharger 3a and a low pressure stage turbocharger 3b as illustrated in Fig. 1 are connected to each other in series. Specifically, the turbocharger 3 includes, from upstream to downstream (close to the engine 2) of the intake pipe 2a, a low pressure stage compressor 311, a high pressure stage compressor 312, an intercooler 313, a throttle valve 314, a supercharging pressure sensor 315, and a temperature sensor 316. In addition, the turbocharger 3 includes, from upstream (close to the engine 2) to downstream of the exhaust pipe 2b, a high pressure stage turbine 321 and a low pressure stage turbine 322.

In addition, the engine control system 1 is provided with an exhaust gas recirculation (EGR) path 330 for reducing NOx or the like in exhaust gas. Specifically, the exhaust gas recirculation (EGR) path 330 is a path through which exhaust gas is fed back from the exhaust opening of the engine 2 to the intake opening of the engine 2 and is provided with an EGR valve 331 for adjusting the amount of exhaust gas to be fed back.

The high pressure stage compressor 312 and the high pressure stage turbine 321 are mechanically coupled to each other via a bearing unit 341 supporting them on a single rotational axis and the high pressure stage compressor 312 and the high pressure stage turbine 321 configure the high pressure stage turbocharger 3a that rotates the high pressure stage compressor 312 using the rotational energy of the high pressure stage turbine 321 and supercharges the engine 2 with air. Here, the high pressure stage compressor 312 is provided with a compressor bypass valve 312a adjusting the amount of air flowing through the bypass path of the compressor. In addition, the high pressure stage turbine 321 is provided with a variable nozzle turbo valve 321a for changing the exhaust gas passing area of the turbine and a high pressure stage wastegate valve 321b for adjusting the amount of exhaust gas flowing through the bypass path of the turbine.

The low pressure stage compressor 311 and the low pressure stage turbine 322 are mechanically coupled to each other via a bearing unit 342 supporting them on a single rotational axis and the low pressure stage compressor 311 and the low pressure stage turbine 322 configure the low pressure stage turbocharger 3b that rotates the low pressure stage compressor 311 using the rotational energy of the low pressure stage turbine 322 and supercharges the engine 2 with air. Here, the low pressure stage turbine 322 is provided with a low pressure stage wastegate valve 322a adjusting the amount of exhaust gas flowing through the bypass path of the low pressure stage turbine 322.

The supercharging pressure sensor 315 is a pressure sensor provided in the intake path from the high pressure stage compressor 312 to the engine 2. The supercharging pressure sensor 315 detects the pressure (supercharging pressure) of air with which the engine 2 is supercharged and reports the detected supercharging pressure (the actual supercharging pressure) to the ECU 100.

The temperature sensor 316 is a temperature sensor provided in the intake path from the high pressure stage compressor 312 to the engine 2. The temperature sensor 316 detects the temperature of air with which the engine 2 is supercharged and reports the detected temperature to the ECU 100.

The turbocharger 3 having the above structure can blow more air to the engine 2 since the high pressure stage turbocharger 3a and the low pressure stage turbocharger 3b individually perform work.

The ECU 100 is a microcomputer including an input-output apparatus, a calculation apparatus performing various types of calculation, a main memory temporarily storing calculation data, and a storing unit storing calculation programs. The ECU 100 achieves the following processing by installing a control program controlling the engine control system 1 in the storing unit. That is, the ECU 100 controls the operation of the engine 2 and the turbocharger 3 by adjusting the amount of fuel injection for the engine 2 and the opening degrees of various types of valves and throttles included in the turbocharger 3 based on operation information by the driver such as the accelerator pedal position or detected information from various types of sensors. That is, the control apparatus for an internal combustion engine with a supercharger according to the invention is achieved as one function of the ECU 100.

The ECU 100 is not limited to the microprocessor described above and may be special hardware designed for controlling the engine control system 1 such as, for example, a programmable logic device.

### 2. Control apparatus for the internal combustion engine with a supercharger

### 2-1. First embodiment

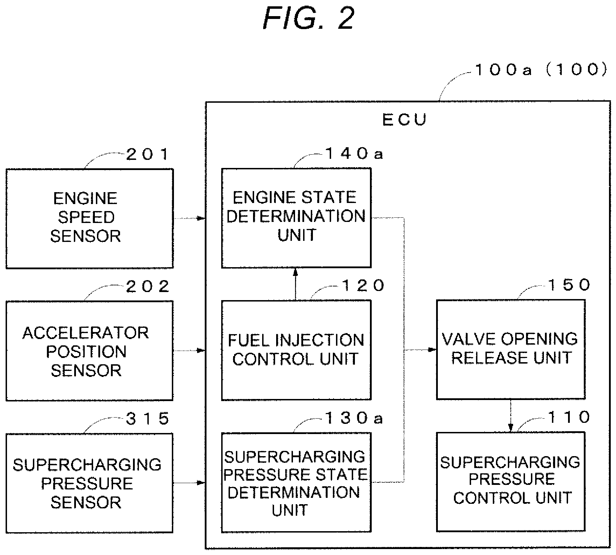

Next, the internal structure of the ECU 100 (referred to below as the ECU 100a to distinguish it from ECUs in other embodiments) according to the first embodiment will be described specifically with reference to Fig. 2.

The ECU 100 includes a supercharging pressure control unit 110 controlling the pressure (supercharging pressure) of air with which the engine 2 is supercharged, a fuel injection control unit 120 controlling the amount of fuel injected to the engine 2 and the timing at which fuel is injected to the engine 2, a supercharging pressure state determination unit 130a determining the variation state of the supercharging pressure, an engine state determination unit 140a, and a valve opening release unit 150.

The supercharging pressure control unit 110 adjusts the supercharging pressure to the target supercharging pressure by changing the opening degree of an exhaust flow rate regulating valve adjusting the flow rate of exhaust gas flowing through an exhaust path. Here, the exhaust flow rate regulating valve indicates the variable nozzle turbo valve 321a, the high pressure stage wastegate valve 321b, and the low pressure stage wastegate valve 322a in the above turbocharger 3.

The supercharging pressure control unit 110 sets the target value (target supercharging pressure) of the supercharging pressure based on accelerator pedal position information from an accelerator position sensor 202, the amount of fuel injected by the fuel injection control unit 120, the engine speed from an engine speed sensor 201, and the like. Then, the supercharging pressure control unit 110 controls the supercharging pressure by adjusting the opening degree of the exhaust flow rate regulating valve based on physical expressions such as a valve restriction expression and a conversion efficiency expression for the turbine and compressor so that the difference between the actual supercharging pressure and the target supercharging pressure converges to zero.

More specifically, of the above three exhaust flow rate regulating valves, while fully opening or fully closing the opening degrees of two of the exhaust flow rate regulating valves depending on three load areas separated by the load (speed) of the engine 2, the supercharging pressure control unit 110 changes the opening degree of the remaining exhaust flow rate regulating valve (referred to below as the target opening degree variable valve).

First, in the low load area in which the amount of exhaust gas is small, the supercharging pressure control unit 110 controls the supercharging pressure by changing the opening degree of the variable nozzle turbo valve 321a as the target opening degree variable valve in the state in which the high pressure stage wastegate valve 321b and the low pressure stage wastegate valve 322a are fully closed. Next, in the middle load area in which the engine speed of the engine 2 increases and the amount of exhaust gas is larger than in the low load area, the supercharging pressure control unit 110 controls the supercharging pressure by changing the opening degree of the high pressure stage wastegate valve 321b as the target opening degree variable valve in the state in which the opening degree of the variable nozzle turbo valve 321a is fully opened and the low pressure stage wastegate valve 322a is fully closed. In addition, in the high load area in which the engine speed of the engine 2 further increases and the amount of exhaust gas is larger than in the middle load area, the supercharging pressure control unit 110 controls the supercharging pressure by changing the opening degree of the low pressure stage wastegate valve 322a as the target opening degree variable valve in the state in which the opening degrees of the variable nozzle turbo valve 321a and high-pressure side wastegate valve are fully opened. As described above, the supercharging pressure is controlled using an operation mode (referred to below as the two-stage mode) in which exhaust gas is introduced to both the high pressure stage turbine 321 and the low pressure stage turbine 322 to rotate them from the low load area to the middle load area. In the high load area, however, the supercharging pressure is controlled using an operation mode (referred to below as the one-stage mode) in which the high pressure stage turbine 321 does not work and the low pressure stage turbine 322 works by receiving exhaust gas.

To improve the responsivity of the supercharging pressure in the individual load areas, the supercharging pressure control unit 110 has the function of forcibly fully closing the target variable valve continuously when determining, based on the physical model, that the supercharging pressure cannot immediately reach the target supercharging pressure unless the target variable valve is fully closed. For example, in the case of the middle load area described above, when the rotational frequency (model value) of the high pressure stage turbine 321 estimated based on the physical model is lower than the target value and the difference between the rotational frequency and the target value is more than the threshold, the supercharging pressure control unit 110 determines that the supercharging pressure cannot immediately reach the target supercharging pressure unless the high pressure stage wastegate valve 321b (target variable valve) is fully closed and forcibly fully closes the high pressure stage wastegate valve 321b continuously.

The fuel injection control unit 120 controls the amount of fuel injected to the engine 2 and the timing at which fuel is injected to the engine 2 based on information such as the accelerator pedal position detected from the accelerator position sensor 202 and the engine speed detected from the engine speed sensor 201.

When the supercharging pressure control unit 110 forcibly closes the opening degree of the target opening degree variable valve continuously, the supercharging pressure state determination unit 130a determines whether the actual supercharging pressure and its variations meet predetermined conditions.

When the supercharging pressure control unit 110 forcibly closes the opening degree of the target opening degree variable valve continuously, the engine state determination unit 140a determines whether both the engine speed and the fuel injection amount of the engine 2 are more than the thresholds. Alternatively, the engine state determination unit 140a may determine whether at least one of the engine speed and the fuel injection amount of the engine 2 is more than the threshold.

The valve opening release unit 150 prevents the supercharging pressure from overshooting significantly enough to possibly cause a hardware failure by changing, in the opening direction from the fully closing state, the target opening degree variable valve forcibly closed by the supercharging pressure control unit 110 continuously according to determination results by the supercharging pressure state determination unit 130a and the engine state determination unit 140a. By changing target opening degree variable valve in the opening direction from the fully closing state as described above, as is apparent from the following example, even when deviation occurs between actual phenomenon and the physical model due to, for example, individual differences or variations in manufacturing, it is possible to adjust the supercharging pressure to the target supercharging pressure while achieving high robustness that, for example, prevents a hardware failure even when deviation occurs between actual phenomenon and the physical model.

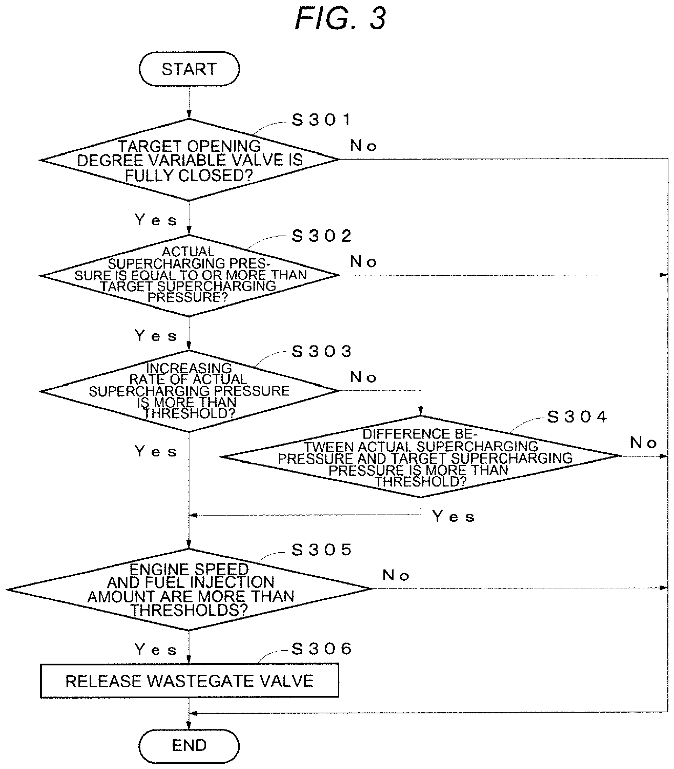

Next, the processing performed by the ECU 100a having the above structure will be described according to the flowchart illustrated in Fig. 3. This processing assumes that the supercharging pressure control unit 110 controls the supercharging pressure by changing the opening degree of the high pressure stage wastegate valve 321b as a target opening degree variable valve.

In step S301, the supercharging pressure state determination unit 130a determines whether the supercharging pressure control unit 110 fully closes the opening degree of the high pressure stage wastegate valve 321b continuously in a forcible manner. When the high pressure stage wastegate valve 321b is fully closed (Yes in S301), the processing proceeds to step S302. When the high pressure stage wastegate valve 321b is not fully closed (No in S301), the processing illustrated in Fig. 3 ends.

In step S302, the supercharging pressure state determination unit 130a determines whether the actual supercharging pressure (that is, the measurement value of the supercharging pressure sensor 315) is equal to or more than the target supercharging pressure set by the supercharging pressure control unit 110. When the actual supercharging pressure is equal to or more than the target supercharging pressure (Yes in S302), on the assumption that it has been falsely recognized, from the physical model, that the supercharging pressure cannot reach the target supercharging pressure unless the high pressure stage wastegate valve 321b is fully closed, the processing proceeds to step S303. In contrast, when the actual supercharging pressure is less than the target supercharging pressure (No in S302), the processing illustrated in Fig. 3 ends.

In step S303, the supercharging pressure state determination unit 130a determines whether the increasing rate [hPa/s] at which the actual supercharging pressure increases per unit time (for example, 1 second) is more than a threshold. When the supercharging pressure increasing rate is more than the threshold (Yes in S303), on the assumption that it has been falsely recognized, from the physical model, that the supercharging pressure cannot reach the target supercharging pressure unless the high pressure stage wastegate valve 321b is fully closed, the processing proceeds to step S305. In contrast, when the supercharging pressure increasing rate is equal to or less than the threshold (No in S303), the processing proceeds to step S304.

In step S304, the supercharging pressure state determination unit 130a determines whether the actual supercharging pressure is higher than the target supercharging pressure and the difference between the actual supercharging pressure and the target supercharging pressure is more than a threshold. When the difference between the actual supercharging pressure and the target supercharging pressure is more than the threshold (Yes in S304), on the assumption that it has been falsely recognized, from the physical model, that the supercharging pressure cannot reach the target supercharging pressure unless the high pressure stage wastegate valve 321b is fully closed, the processing proceeds to step S305. In contrast, when the difference between the actual supercharging pressure and the target supercharging pressure is equal to or less than the threshold (No in S304), the processing illustrated in Fig. 3 ends.

In step S305, the engine state determination unit 140a determines whether the engine speed and the fuel injection amount of the engine 2 are more than the thresholds. When both the engine speed and the fuel injection amount of the engine 2 are more than the thresholds (Yes in S305), the processing proceeds to step S306 since particularly the supercharging pressure is apt to overshoot significantly enough to possibly cause a hardware failure. In contrast, when one or both of the engine speed and the fuel injection amount of the engine 2 are equal to or less than the threshold (No in S305), the processing illustrated in Fig. 3 ends.

In step S306, the valve opening release unit 150 prevents the supercharging pressure from overshooting significantly enough to possibly cause a hardware failure by changing the target opening degree variable valve fully opened in a forcible manner continuously by the supercharging pressure control unit 110 in the opening direction from the fully closing state, and finishes the processing illustrated in Fig. 3.

In the processing illustrated in Fig. 3 above, on the assumption that the supercharging pressure control unit has falsely recognized, from the physical model, that the supercharging pressure cannot reach the target supercharging pressure unless the exhaust flow rate regulating valve is fully closed in the determination in steps S302 to S304, the processing proceeds to step S305. In addition, the predetermined condition is met in step S305, the processing proceeds to step S306 and changes the opening degree of the exhaust flow rate regulating valve in the opening direction from the fully closing state. This prevents the supercharging pressure from overshooting significantly enough to possibly cause a hardware failure.

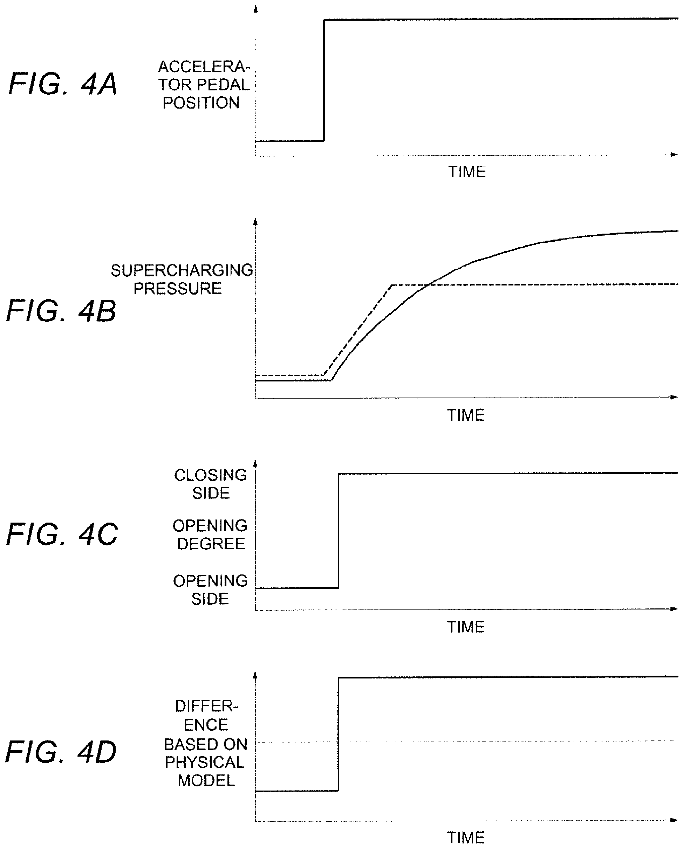

Fig. 4 illustrates various types of time responses for a comparison example in which the supercharging pressure control unit 110 controls the supercharging pressure by skipping step S306. Specifically, Fig. 4(A) illustrates the time response of the accelerator pedal position and the accelerator pedal position (opening degree) is large on the upper side of the vertical axis. In addition, Fig. 4(B) illustrates the time responses of the target supercharging pressure (dashed line) and the actual supercharging pressure (solid line) and the supercharging pressure is high on the upper side of the vertical axis. In addition, Fig. 4(C) illustrates the time responses of the opening degree of the high pressure stage wastegate valve 321b and the upper side of the vertical axis indicates the valve closing side. In addition, Fig. 4(D) illustrates the time responses of the difference (solid line) between the rotational frequency (model value) of the high pressure stage turbine 321 based on the physical model and the target value and the threshold (dashed line) concerning determination for fully closing the high pressure stage wastegate valve 321b forcibly.

As illustrated in Fig. 4, in the comparison example, the supercharging pressure control unit 110 determines that the rotational frequency (model value) of the high pressure stage turbine 321 estimated based on the physical model in response to a change in the accelerator pedal position (position in which acceleration is instructed) is less than the target value and the difference between the rotational frequency and the target value is more than the threshold and fully closes the high pressure stage wastegate valve 321b continuously. Since the supercharging pressure control unit 110 falsely recognizes, from the physical model, that the supercharging pressure cannot reach the target supercharging pressure unless the high pressure stage wastegate valve 321b is fully closed, the supercharging pressure exceeds the target supercharging pressure and overshoots significantly enough to possibly cause a hardware failure. That is, the exhaust pressure upstream of the high pressure stage turbine 321 increases and exceeds the allowable value defined by the hardware, possibly causing a hardware failure undesirably.

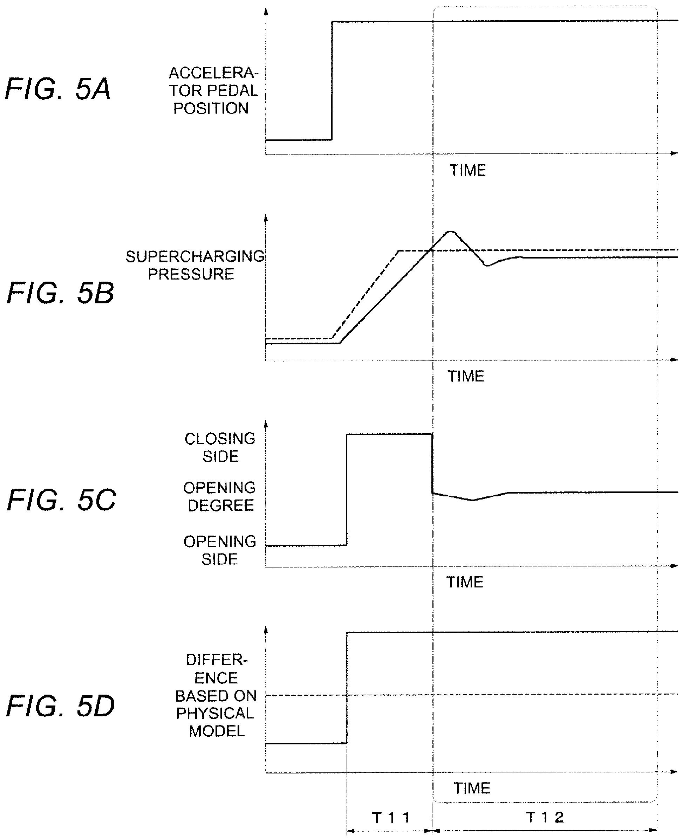

On the other hand, the time responses of the example achieved by the processing illustrated in Fig. 3 above will be described with reference to Fig. 5. Specifically, Fig. 5 (A) illustrates the time response of the accelerator pedal position and the accelerator pedal position (opening degree) is large on the upper side of the vertical axis. In addition, Fig. 5(B) illustrates the time responses of the target supercharging pressure (dashed line) and the actual supercharging pressure (solid line) and the supercharging pressure is high on the upper side of the vertical axis. In addition, Fig. 5(C) illustrates the time response of the opening degree of the high pressure stage wastegate valve 321b and the upper side of the vertical axis indicates the valve closing side. In addition, Fig. 5(D) illustrates the time responses of the difference (solid line) between the rotational frequency (model value) of the high pressure stage turbine 321 based on the physical model and the target value and the threshold (dashed line) concerning determination for fully closing the high pressure stage wastegate valve 321b forcibly.

As illustrate in Fig. 5, in the period T11 from the rise of the accelerator pedal position in which acceleration is instructed until the supercharging pressure reaches the target supercharging pressure, the supercharging pressure control unit 110 fully closes the high pressure stage wastegate valve 321b in a forcible manner continuously based on the physical model in this example as in the above comparison example. After that, in the period T12 in which the supercharging pressure reaches the target supercharging pressure and increases, since the supercharging pressure control unit falsely recognizes, from the physical model, that the supercharging pressure cannot reach the target supercharging pressure unless the exhaust flow rate regulating valve is fully closed in this example, the wastegate valve 321b is changed in the opening direction from the fully closing state. If the wastegate valve 321b is released in this way, the supercharging pressure can be controlled by preventing the supercharging pressure from overshooting significantly enough to possibly cause a hardware failure.

Although the supercharging pressure control unit 110 controls the supercharging pressure by changing the opening degree using the high pressure stage wastegate valve 321b as the target opening degree variable valve in the example, the invention is not limited to the example and, for example, the variable nozzle turbo valve 321a or the low pressure stage wastegate valve 322a may be the target opening degree variable valve. That is, even when the variable nozzle turbo valve 321a or the low pressure stage wastegate valve 322a may be fully closed in a forcible manner continuously as the target opening degree variable valve, the fully closing state may be released based on the above determination in steps S301 to S305. In addition, the actual supercharging pressure is not limited to a value from the supercharging pressure sensor 315 described above and may be estimated based on values from various types of sensors provided in the engine control system 1. In addition, the ECU 100a according to the first embodiment is not limited to the two-stage turbocharger 3 described above and may be one supercharger.

As described above, in the ECU 100a, when the actual supercharging pressure is equal to or more than the target supercharging pressure with the opening degree of the exhaust flow rate regulating valve fully closed, on the assumption that it has been falsely recognized, from the physical model, that the supercharging pressure cannot reach the target supercharging pressure unless the exhaust flow rate regulating valve is fully closed, the opening degree of the exhaust flow rate regulating valve is changed in the opening direction from the fully closing state to prevent the supercharging pressure from overshooting significantly enough to possibly cause a hardware failure. That is, the robustness against deviation between actual phenomenon and the physical model is high and the supercharging pressure can be adjusted to the target supercharging pressure.

Of the processes illustrated in Fig. 3, the processing may directly proceed to step S306 from steps S302 by skipping steps S303 to S305. By performing the determination particularly in steps S303 and step 0304, it is possible to accurately determine whether it has been falsely recognized, from the physical model, that the supercharging pressure cannot reach the target supercharging pressure unless the exhaust flow rate regulating valve is fully closed to prevent degradation of controllability such as unnecessary repetitions of the opening and closing of valves (flopping of valves) or delays in the response speed of the supercharging pressure. In addition, by performing the determination in step S305, it is possible to release the valve only in the operation state in which overshooting large enough to possibly cause a hardware failure is likely to occur, thereby preventing degradation of the controllability, specifically, flopping of valves or degradation of the traceability of the supercharging pressure with respect to the target supercharging pressure.

In addition, step S305 may be replaced by the processing for determining whether at least one of the engine speed and the fuel injection amount of the engine 2 is more than the threshold. That is, when at least one of the engine speed and the fuel injection amount of the engine 2 is more than the threshold, the processing may proceed to step S306 to change the target opening degree variable valve in the opening direction from the fully closing state.

### 2-2. Second embodiment

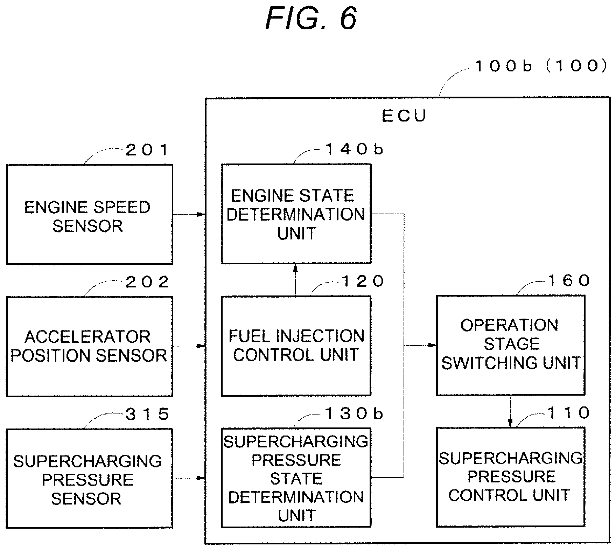

Next, the internal structure of the ECU 100 (referred to below as the ECU 100b to distinguish it from ECUs in other embodiments) according to the second embodiment will be described specifically with reference to Fig. 6.

The ECU 100b includes the supercharging pressure control unit 110 controlling the supercharging pressure for supercharging air with the engine 2, the fuel injection control unit 120 controlling the amount of fuel injected to the engine 2 and the timing at which fuel is injected to the engine 2, a supercharging pressure state determination unit 130b determining the variation state of the supercharging pressure, an engine state determination unit 140b, and an operation stage switching unit 160. Components of the ECU 100b that are the same as in the ECU 100a according to the first embodiment are given the same reference numerals and descriptions are omitted.

The supercharging pressure state determination unit 130b determines whether variation of the actual supercharging pressure controlled in the two-stage mode by the supercharging pressure control unit 110 meet predetermined conditions.

The engine state determination unit 140b determines whether the engine speed of the engine 2 detected by the engine speed sensor 201 and the fuel injection amount by the fuel injection amount control unit are more than thresholds when the supercharging pressure control unit 110 controls the supercharging pressure in the two-stage mode. The engine state determination unit 140b may also determine whether one of the engine speed and the fuel injection amount is more than the threshold.

Depending on the determination results from the supercharging pressure state determination unit 130b and the engine state determination unit 140b, the operation stage switching unit 160 instructs the supercharging pressure control unit 110 to perform switching from the two-stage mode to the one-stage mode. As is apparent from the following examples, by performing switching from the two-stage mode to the one-stage mode as described above, even when deviation occurs between actual phenomenon and the physical model due to, for example, individual differences or variations in manufacturing, it is possible to adjust the supercharging pressure to the target supercharging pressure by preventing the supercharging pressure from overshooting significantly enough to possibly cause a hardware failure.

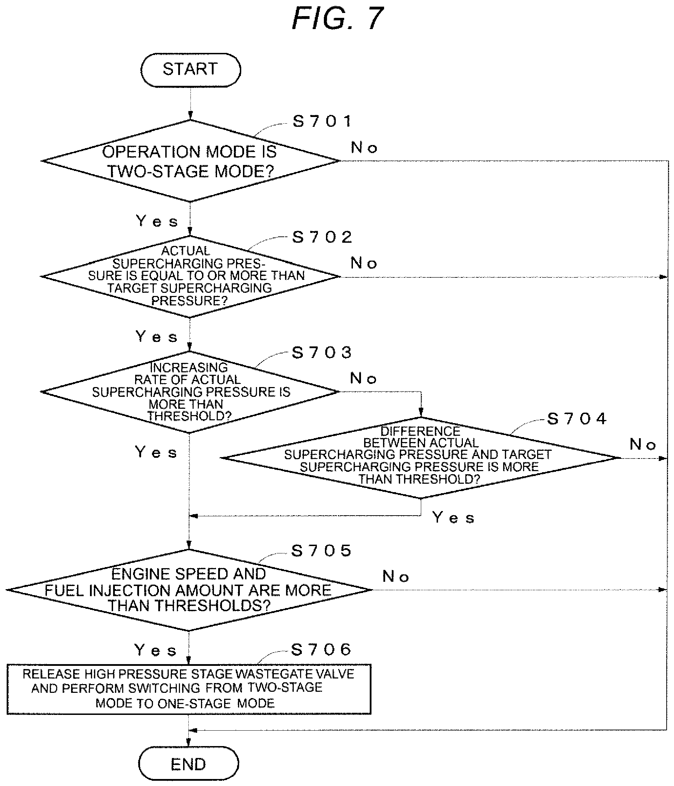

Next, the processing to be performed by the ECU 100b will be described according to the flowchart illustrated in Fig. 7.

In step S701, the supercharging pressure state determination unit 130b determines whether the operation mode of the supercharging pressure control unit 110 is the two-stage mode. When the operation mode of the supercharging pressure control unit 110 is the two-stage mode (Yes in S701), the processing proceeds to step S702. In contrast, when the operation mode of the supercharging pressure control unit 110 is the one-stage mode instead of the two-stage mode (No in S702), the processing illustrated in Fig. 7 ends.

In step S702, the supercharging pressure state determination unit 130b determines whether the actual supercharging pressure (that is, the measurement value of the supercharging pressure sensor 315) is equal to or more than the target supercharging pressure set by the supercharging pressure control unit 110. When the actual supercharging pressure is equal to or more than the target supercharging pressure (Yes in S702), on the assumption that it has been falsely recognized, from the physical model, that the supercharging pressure cannot reach the target supercharging pressure unless the high pressure stage turbocharger 3a works, the processing proceeds to step S703. In contrast, when the actual supercharging pressure is less than the target supercharging pressure (No in S702), the processing illustrated in Fig. 7 ends.

In step S703, the supercharging pressure state determination unit 130b determines whether the increasing rate at which the actual supercharging pressure increases per unit time (for example, 1 second) is more than a threshold. When supercharging pressure increasing rate is more than the threshold (Yes in S703), on the assumption that it has been falsely recognized, from the physical model, that the supercharging pressure cannot reach the target supercharging pressure unless the high pressure stage turbocharger 3a works, the processing proceeds to step S705. In contrast, when the supercharging pressure increasing rate is equal to or less than the threshold (No in S303), the processing proceeds to step S704.

In step S704, the supercharging pressure state determination unit 130b determines whether the actual supercharging pressure is higher the target supercharging pressure and the difference between the actual supercharging pressure and the target supercharging pressure is more than a threshold. When the difference between the actual supercharging pressure and the target supercharging pressure is more than the threshold (Yes in S704), on the assumption that it may have been falsely recognized, from the physical model, that the supercharging pressure cannot reach the target supercharging pressure unless the high pressure stage turbocharger 3a works, the processing proceeds to step S705. In contrast, when the difference between the actual supercharging pressure and the target supercharging pressure is equal to or less than the threshold (No in S704), the processing illustrated in Fig. 7 ends.

In step S705, the engine state determination unit 140b determines whether the engine speed and the fuel injection amount of the engine 2 are more than the thresholds. When both the engine speed and the fuel injection amount of the engine 2 are more than the thresholds (Yes in S705), since the supercharging pressure is particularly apt to overshoot significantly enough to possibly cause a hardware failure, the processing proceeds to step S706. In contrast, when one or both of the engine speed and the fuel injection amount of the engine 2 are equal to or less than the thresholds (No in S705), the processing illustrated in Fig. 7 ends.

In step S706, the operation stage switching unit 160 instructs the supercharging pressure control unit 110 to perform switching from the two-stage mode to the one-stage mode and the processing illustrated in Fig. 7 ends.

In the processing illustrated in Fig. 7 above, on the assumption that the supercharging pressure control unit has falsely recognized, from the physical model, that the supercharging pressure cannot reach the target supercharging pressure unless the high pressure stage turbocharger 3a works in the determination in steps S702 to S704, the processing proceeds to step S705. In addition, when the predetermined condition is met in step S705, the processing proceeds to step S706 and the supercharging pressure can be prevented from overshooting significantly enough to possibly cause a hardware failure as compared with the following comparison example in which, for example, step S706 is skipped by instructing the supercharging pressure control unit 110 to perform switching from the two-stage mode and the one-stage mode.

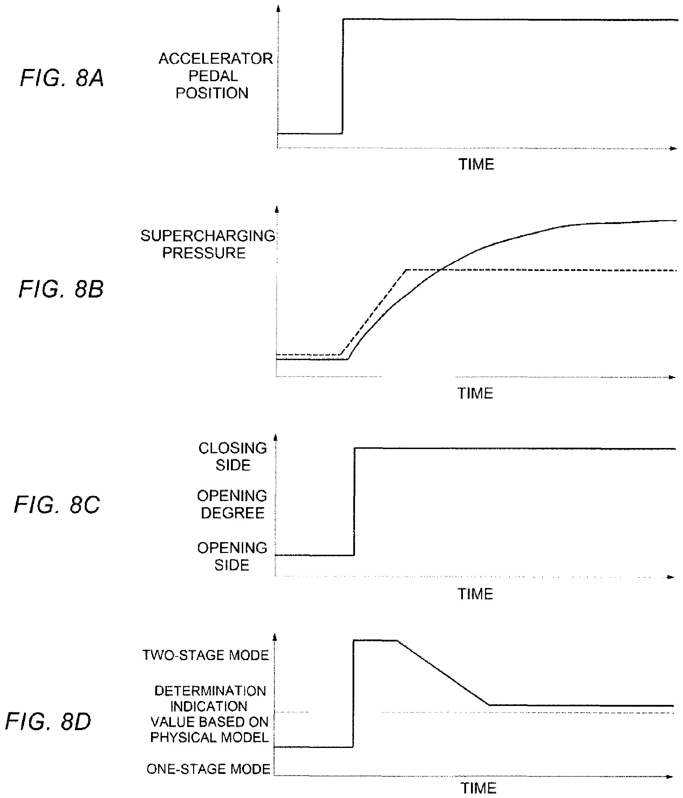

Fig. 8 illustrates various types of time responses for a comparison example in which the supercharging pressure control unit 110 controls the supercharging pressure by skipping step S706. Specifically, Fig. 8(A) illustrates the time response of the accelerator pedal position and the accelerator pedal position (opening degree) is large on the upper side of the vertical axis. In addition, Fig. 8(B) illustrates the time responses of the target supercharging pressure (dashed line) and the actual supercharging pressure (solid line) and the supercharging pressure is high on the upper side of the vertical axis. In addition, Fig. 8(C) illustrates the time responses of the opening degree of the high pressure stage wastegate valve 321b and the upper side of the vertical axis indicates the valve closing side. In addition, Fig. 8(D) illustrates the time responses of the determination indication value (solid line) of the operation mode based on the physical model and its threshold (dashed line).

As illustrated in Fig. 8, in the comparison example, since the supercharging pressure control unit 110 has falsely recognized, based on the physical model, that the supercharging pressure cannot reach the target supercharging pressure unless the high pressure stage turbocharger 3a works in response to an change in the accelerator pedal position (position in which acceleration is instructed), switching from the two-stage mode to the one-stage mode is not performed and the opening degree of the high pressure stage wastegate valve 321b is kept on the closing side. As a result, the supercharging pressure exceeds the target supercharging pressure and overshoots significantly enough to possibly cause a hardware failure. That is, the exhaust pressure upstream of the high pressure stage turbine 321 increases and exceeds the allowable value defined by the hardware, possibly causing a hardware failure undesirably.

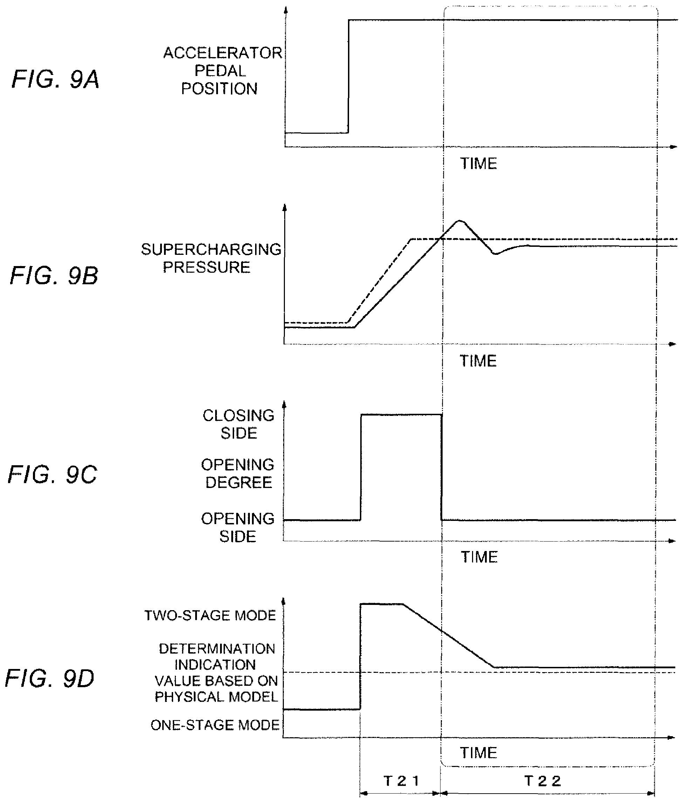

On the other hand, the time responses of the example achieved by the processing illustrated in Fig. 7 above will be described with reference to Fig. 9. Specifically, Fig. 9(A) illustrates the time response of the accelerator pedal position and the accelerator pedal position (opening degree) is large on the upper side of the vertical axis. In addition, Fig. 9(B) illustrates the time responses of the target supercharging pressure (dashed line) and the actual supercharging pressure (solid line) and the supercharging pressure is high on the upper side of the vertical axis. In addition, Fig. 9(C) illustrates the time response of the opening degree of the high pressure stage wastegate valve 321b and the upper side of the vertical axis indicates the valve closing side. In addition, Fig. 9(D) illustrates the time responses of the determination indication value (solid line) of the operation mode based on the physical model and its threshold (dashed line).

As illustrate in Fig. 9, in the period T21 from the rise of the accelerator pedal position in which acceleration is instructed until the supercharging pressure reaches the target supercharging pressure, the supercharging pressure control unit 110 operates in the two-stage mode and keeps the opening degree of the high pressure stage wastegate valve 321b in the closing side in this example as in the first comparison example above. After that, in the period T22 in which the supercharging pressure reaches the target supercharging pressure and increases, on the assumption that it has been falsely recognized, from the physical model, that the supercharging pressure cannot reach the target supercharging pressure unless the high pressure stage turbocharger 3a works, the opening degree of the wastegate valve 321b is fully opened in this example to instruct the supercharging pressure control unit 110 to perform switching from the two-stage mode to the one-stage mode. By switching the operation mode as described above, the supercharging pressure can be prevented from overshooting significantly enough to possibly cause a hardware failure. Therefore, as is apparent by comparison between Fig. 8(B) and Fig. 9(B), even when deviation occurs between actual phenomenon and the physical model due to, for example, individual differences or variations in manufacturing, the supercharging pressure can be prevented from overshooting significantly enough to possibly cause a hardware failure.

As described above, in the ECU 100b, when the actual supercharging pressure controlled in the two-stage mode is equal to or more than the target supercharging pressure, on the assumption that it has been falsely recognized, from the physical model, that the supercharging pressure cannot reach the target supercharging pressure unless the high pressure stage supercharger 3a works, switching from the two-stage mode to the one-stage mode is forcibly performed to prevent the supercharging pressure from overshooting significantly enough to possibly cause a hardware failure. That is, the robustness against deviation between actual phenomenon and the physical model is high and the supercharging pressure can be adjusted to the target supercharging pressure.

Of the processes illustrated in Fig. 7, the processing may directly proceed to step S706 from steps S702 by skipping steps S703 to S705. By performing the determination particularly in steps S703 and step S704, it is possible to accurately determine whether it has been falsely recognized, from the physical model, that the supercharging pressure cannot reach the target supercharging pressure unless the high pressure stage turbocharger 3a works to prevent degradation of controllability such as unnecessary repetitions of the opening and closing of valves (flopping of valves) or delays in the response speed of the supercharging pressure. In addition, by performing the determination in step S705, it is possible to perform switching from the two-stage mode to the one-stage mode only in the operation state in which overshooting large enough to possibly cause a hardware failure is likely to occur, thereby preventing degradation of the controllability, specifically, flopping of valves or degradation of the traceability of the supercharging pressure with respect to the target supercharging pressure.

In addition, step S705 may be replaced by the processing for determining whether at least one of the engine speed and the fuel injection amount of the engine 2 is more than the threshold. That is, when at least one of the engine speed and the fuel injection amount of the engine 2 is more than the threshold, the processing may proceed to step S706 to perform switching from the two-stage mode to the one-stage mode.

### 3. Others

The actual supercharging pressure is not limited to a value from the supercharging pressure sensor 315 described above and may be estimated based on various types of sensors provided in the engine control system 1.

In addition, the invention may be achieved by providing a non-temporarily recording medium for an ECU and causing the calculation processing unit (CPU or MPU) of the ECU to read and execute an engine control program recorded in this recording medium.

In this case, the engine control program read from the non-temporarily recording medium achieves the function of the above embodiment. Accordingly, the engine control program and the non-temporarily recording medium in which this program is recorded are also aspects of the invention.

The non-temporarily recording medium for providing the engine control program may be, for example, a flexible disk, hard disk drive, magnetic optical disk, optical disk such as a CD-ROM, CD-R, CD-RW, DVD-ROM, DVD-RAM, DVD-RW, DVD+RW, magnetic tape, non-volatile memory card, and ROM. Alternatively, the program may be downloaded via a communication network.

### REFERENCE SIGNS LIST

2 engine
321a variable nozzle turbo valve
321b high pressure stage wastegate valve
322a low pressure stage wastegate valve
110 supercharging pressure control unit
130a, 130b supercharging pressure state determination unit
150 valve opening release unit
160 operation stage switching unit

## Claims

1. A control apparatus for an internal combustion engine (2) with a supercharger (3) including a turbine (321, 322) driven by exhaust gas flowing through an exhaust path (2b) of the internal combustion engine (2) and supercharging the internal combustion engine (2) with air flowing through an intake path (2a) using a compressor (311, 312) coupled to the turbine (321, 322), the control apparatus comprising:
a supercharging pressure control unit (110) adjusting a supercharging pressure for supercharging the internal combustion engine (2) with air to a target supercharging pressure by changing an opening degree of an exhaust flow rate regulating valve (321a, 321b, 322a) adjusting a flow rate of the exhaust gas flowing through the exhaust path (2b) based on a physical model including a valve restriction expression and a conversion efficiency expression for the turbine and the compressor of the internal combustion engine with a supercharger (3), the supercharging pressure control unit (110), in response to a change in the accelerator pedal position in which acceleration is instructed, forcibly fully closing the exhaust flow rate regulating valve continuously when it determines, based on the physical model, that the supercharging pressure cannot immediately reach the target supercharging pressure unless the exhaust flow rate regulating valve is fully closed when in case of a middle load area the rotational frequency of the turbine estimated based on the model is lower than a target value and the difference between the rotational frequency and the target value is more than a threshold ;
a supercharging pressure state determination unit (130a) determining whether an actual supercharging pressure is equal to or more than the target supercharging pressure when the opening degree of the exhaust flow rate regulating valve (321a, 321b, 322a) is put in a fully closing state; and
a valve opening release unit (150) changing the opening degree of the exhaust flow rate regulating valve (321a, 321b, 322a) in an opening direction from the fully closing state when the actual supercharging pressure is equal to or more than the target supercharging pressure when the opening degree of the exhaust flow rate regulating valve (321a, 321b, 322a) is put in the fully closing state.

2. The control apparatus for an internal combustion engine with a supercharger according to claim 1,
wherein the supercharging pressure state determination unit determines whether the actual supercharging pressure is equal to or more than the target supercharging pressure with the opening degree of the exhaust flow rate regulating valve put in the fully closing state and an increasing rate at which the actual supercharging pressure increases is more than a threshold, and
the valve opening release unit changes the opening degree of the exhaust flow rate regulating valve in the opening direction from the fully closing state when the actual supercharging pressure is equal to or more than the target supercharging pressure with the opening degree of the exhaust flow rate regulating valve put in the fully closing state and the increasing rate at which the actual supercharging pressure increases is more than a threshold.

3. The control apparatus for an internal combustion engine with a supercharger according to claim 1,
wherein the supercharging pressure state determination unit determines whether the actual supercharging pressure is equal to or more than the target supercharging pressure with the opening degree of the exhaust flow rate regulating valve put in the fully closing state and a difference between the actual supercharging pressure and the target supercharging pressure is more than a threshold and
the valve opening release unit changes the opening degree of the exhaust flow rate regulating valve in the opening direction from the fully closing state when the actual supercharging pressure is equal to or more than the target supercharging pressure with the opening degree of the exhaust flow rate regulating valve put in the fully closing state and the difference between the actual supercharging pressure and the target supercharging pressure is more than the threshold.

4. The control apparatus for an internal combustion engine with a supercharger according to any one of claims 1 to 3, **characterized by** further comprising:
an internal combustion engine state determination unit determining whether an engine speed and a fuel injection amount of the internal combustion engine are more than thresholds,
wherein, when the actual supercharging pressure is equal to or more than the target supercharging pressure with the opening degree of the exhaust flow rate regulating valve put in the fully closing state, if the engine speed and the fuel injection amount of the internal combustion engine are more than the thresholds, the opening degree of the exhaust flow rate regulating valve is changed in the opening direction from the fully closing state.

5. A control apparatus for an internal combustion engine with a supercharger (3) including a high pressure stage supercharger (3a) including a high pressure stage turbine (321) driven by exhaust gas flowing through an exhaust path (2b) of the internal combustion engine (2) and supercharging the internal combustion engine (2) with air flowing through an intake path (2a) using a high pressure stage compressor (312) coupled to the high pressure stage turbine (321), a low pressure stage supercharger (3b) including a low pressure stage turbine (322) provided in an exhaust path downstream of the high pressure stage turbine (321) and supercharging the internal combustion engine with air flowing through an intake path upstream of the high pressure stage compressor (312) using a low pressure stage compressor (311) coupled to the low pressure stage turbine (322), and a high pressure stage wastegate valve (321b) provided in a bypass path for exhaust gas flowing through the high pressure stage turbine (321), and a low pressure stage wastegate valve (322a) provided in a bypass path for exhaust gas flowing through the low pressure stage turbine (322), the control apparatus comprising:
a supercharging pressure control unit (110) selecting, based on a physical model including a valve restriction expression and a conversion efficiency expression for the turbines and the compressors of the internal combustion engine with a supercharger, one of a two-stage mode for driving the high pressure stage turbine (321) and the low pressure stage turbine (322) by changing an opening degree of the high pressure stage wastegate valve (321a) while fully closing an opening degree of the low pressure stage wastegate valve (322a) and a one-stage mode for driving the low pressure stage turbine (322) by changing the opening degree of the low pressure stage wastegate valve (322a) while fully opening the opening degree of the high pressure stage wastegate valve (321a) and adjusting a supercharging pressure for supercharging the internal combustion engine (2) with air to a target supercharging pressure, wherein the supercharge pressure control unit (110) selects the two-stage mode with forcibly fully closed opening degree of the low pressure stage wastegate valve (322a) when in response to a change in an accelerator pedal position in which acceleration is instructed it falsely determines on the basis of the physical model that the supercharging pressure cannot reach the target supercharging pressure unless the high pressure stage turbocharger (3a) works when in case of a middle load area the rotational frequency of the turbine estimated based on the model is lower than a target value and the difference between the rotational frequency and the target value is more than the threshold;
a supercharging pressure state determination unit (130b) determining whether the actual supercharging pressure controlled in the selected two-stage mode is equal to or more than the target supercharging pressure; and
an operation mode switching unit (160) instructing the supercharging pressure control unit (110) to perform switching from the two-stage mode to the one-stage mode when the actual supercharging pressure controlled in the two-stage mode is equal to or more than the target supercharging pressure.

6. The control apparatus for an internal combustion engine with a supercharger according to claim 5,
wherein the supercharging pressure state determination unit determines whether the actual supercharging pressure controlled in the two-stage mode is equal to or more than the target supercharging pressure and an increasing rate at which the supercharging pressure increases is more than a threshold and
the operation mode switching unit instructs the supercharging pressure control unit to perform switching from the two-stage mode to the one-stage mode when the actual supercharging pressure controlled in the two-stage mode is equal to or more than the target supercharging pressure and the increasing rate at which the actual supercharging pressure increases is more than the threshold.

7. The control apparatus for an internal combustion engine with a supercharger according to claim 5,
wherein the supercharging pressure state determination unit determines whether the actual supercharging pressure controlled in the two-stage mode is equal to or more than the target supercharging pressure and a difference between the actual supercharging pressure and the target supercharging pressure is more than a threshold and
the valve opening release unit instructs the supercharging pressure control unit to perform switching from the two-stage mode to the one-stage mode when the actual supercharging pressure controlled in the two-stage mode is equal to or more than the target supercharging pressure and the difference between the actual supercharging pressure and the target supercharging pressure is more than the threshold.

8. The control apparatus for an internal combustion engine with a supercharger according to any one of claims 5 to 7, **characterized by** further comprising:
an internal combustion engine state determination unit determining whether an engine speed and a fuel injection amount of the internal combustion engine are more than thresholds,
wherein, when the actual supercharging pressure controlled in the two stage mode is equal to or more than the target supercharging pressure, if the engine speed and the fuel injection amount of the internal combustion engine are more than the thresholds, the supercharging pressure control unit is instructed to perform switching from the two-stage mode to the one-stage mode.

9. A method for controlling an internal combustion engine with a supercharger including a turbine driven by exhaust gas flowing through an exhaust path of the internal combustion engine and supercharging the internal combustion engine with air flowing through an intake path using a compressor coupled to the turbine, the method comprising the steps of:
adjusting a supercharging pressure for supercharging the internal combustion engine with air to a target supercharging pressure by changing an opening degree of an exhaust flow rate regulating valve adjusting a flow rate of the exhaust gas flowing through the exhaust path based on a physical model including a valve restriction expression and a conversion efficiency expression for the turbine and the compressor of the internal combustion engine with a supercharger, the adjusting, carried out by a supercharging pressure control unit (110), in response to a change in the accelerator pedal position in which acceleration is instructed, forcibly fully closing the exhaust flow rate regulating valve continuously when it determines, based on the physical model, that the supercharging pressure cannot immediately reach the target supercharging pressure unless the exhaust flow rate regulating valve is fully closed when in case of a middle load area the rotational frequency of the turbine estimated based on the model is lower than a target value and the difference between the rotational frequency and the target value is more than a threshold ;
determining whether an actual supercharging pressure is equal to or more than the target supercharging pressure when the opening degree of the exhaust flow rate regulating valve is put in a fully closing state; and
changing the opening degree of the exhaust flow rate regulating valve in an opening direction from the fully closing state when the actual supercharging pressure is equal to or more than the target supercharging pressure when the opening degree of the exhaust flow rate regulating valve is put in the fully closing state.

10. A method for controlling an internal combustion engine with a supercharger including a high pressure stage supercharger including a high pressure stage turbine driven by exhaust gas flowing through an exhaust path of the internal combustion engine and supercharging the internal combustion engine with air flowing through an intake path using a high pressure stage compressor coupled to the high pressure stage turbine, a low pressure stage supercharger including a low pressure stage turbine provided in an exhaust path downstream of the high pressure stage turbine and supercharging the internal combustion engine with air flowing through an intake path upstream of the high pressure stage compressor using a low pressure stage compressor coupled to the low pressure stage turbine, and a high pressure stage wastegate valve provided in a bypass path for exhaust gas flowing through the high pressure stage turbine, and a low pressure stage wastegate valve provided in a bypass path for exhaust gas flowing through the low pressure stage turbine, the method comprising the steps of:
selecting, based on a physical model including a valve restriction expression and a conversion efficiency expression for the turbines and the compressors of the internal combustion engine with a supercharger, one of a two-stage mode for driving the high pressure stage turbine and the low pressure stage turbine by changing an opening degree of the high pressure stage wastegate valve while fully closing an opening degree of the low pressure stage wastegate valve and a one-stage mode for driving the low pressure stage turbine by changing the opening degree of the low pressure stage wastegate valve while fully opening the opening degree of the high pressure stage wastegate valve and adjusting a supercharging pressure for supercharging the internal combustion engine with air to a target supercharging pressure, wherein the selecting, carried out by a supercharge pressure control unit (110), selects the two-stage mode with forcibly fully closed opening degree of the low pressure stage wastegate valve (322a) when in response to a change in an accelerator pedal position in which acceleration is instructed it falsely determines on the basis of the physical model that the supercharging pressure cannot reach the target supercharging pressure unless the high pressure stage turbocharger (3a) works when in case of a middle load area the rotational frequency of the turbine estimated based on the model is lower than a target value and the difference between the rotational frequency and the target value is more than the threshold;
determining whether the actual supercharging pressure controlled in the selected two-stage mode is equal to or more than the target supercharging pressure; and
performing switching from the two-stage mode to the one-stage mode to adjust the supercharging pressure to the target supercharging pressure when the actual supercharging pressure controlled in the two-stage mode is equal to or more than the target supercharging pressure.

## Patentansprüche

1. Steuerungsvorrichtung für einen Verbrennungsmotor (2) mit einer Ladedruckerhöhungsvorrichtung (3), die eine Turbine (321, 322) umfasst, die durch Abgas angetrieben wird, das durch einen Abgaspfad (2b) des Verbrennungsmotor (2) strömt, und den Verbrennungsmotor (2) mit Luft, die durch einen Ansaugpfad (2a) strömt, unter Verwendung eines Verdichters (311, 312), der mit der Turbine (321, 322) gekoppelt ist, auflädt, wobei die Steuerungsvorrichtung Folgendes umfasst:
eine Ladedrucksteuereinheit (110), die einen Ladedruck zum Aufladen des Verbrennungsmotors (2) mit Luft auf einen Soll-Ladedruck verstellt, indem ein Öffnungsgrad eines Abgasströmungsraten-Regelventils (321a, 321b, 322a) verändert wird, das eine Strömungsrate des durch den Abgaspfad (2b) strömenden Abgases auf der Grundlage eines physikalischen Modells verstellt, das einen Ventilverengungsausdruck und Umwandlungseffizienzausdruck für die Turbine und den Verdichter des Verbrennungsmotors mit einer Ladedruckerhöhungsvorrichtung (3) umfasst, wobei die Ladedrucksteuereinheit (110), in Reaktion auf eine Veränderung der Gaspedalposition, mit der eine Beschleunigung angewiesen wird, zwangsweise das Abgasströmungsraten-Regelventil kontinuierlich vollständig schließt, wenn sie auf der Basis des physikalischen Modells bestimmt, dass der Ladedruck nicht sofort den Soll-Ladedruck erreichen kann, sofern nicht das Abgasströmungsraten-Regelventil vollständig geschlossen ist, wenn im Fall eines Teillastbereichs die auf der Basis des Modells geschätzte Rotationsfrequenz der Turbine kleiner ist als ein Sollwert und die Differenz zwischen der Rotationsfrequenz und dem Sollwert größer ist als eine Schwelle;
eine Ladedruckzustand-Bestimmungseinheit (130a), die bestimmt, ob ein Ist-Ladedruck mindestens so hoch ist wie der Soll-Ladedruck, wenn der Öffnungsgrad des Abgasströmungsraten-Regelventils (321a, 321b, 322a) in einen vollständig geschlossenen Zustand versetzt ist; und
eine Ventilöffnungs-Freigabeeinheit (150), die den Öffnungsgrad des Abgasströmungsraten-Regelventils (321a, 321b, 322a) in einer Öffnungsrichtung aus dem vollständig geschlossenen Zustand ändert, wenn der Ist-Ladedruck mindestens so hoch ist wie der Soll-Ladedruck, wenn der Öffnungsgrad des Abgasströmungsraten-Regelventils (321a, 321b, 322a) in den vollständig geschlossenen Zustand versetzt ist.

2. Steuerungsvorrichtung für einen Verbrennungsmotor mit einer Ladedruckerhöhungsvorrichtung nach Anspruch 1, wobei die Ladedruckzustand-Bestimmungseinheit bestimmt, ob der Ist-Ladedruck mindestens so hoch ist wie der Soll-Ladedruck, während der Öffnungsgrad des Abgasströmungsraten-Regelventils in den vollständig geschlossenen Zustand versetzt ist und eine zunehmende Rate, mit welcher der Ist-Ladedruck steigt, größer ist als eine Schwelle, und
die Ventilöffnungs-Freigabeeinheit den Öffnungsgrad des Abgasströmungsraten-Regelventils in der Öffnungsrichtung aus dem vollständig geschlossenen Zustand ändert, wenn der Ist-Ladedruck mindestens so hoch ist wie der Soll-Ladedruck, während der Öffnungsgrad des Abgasströmungsraten-Regelventils in den vollständig geschlossenen Zustand versetzt ist und die zunehmende Rate, mit welcher der Ist-Ladedruck steigt, größer ist als eine Schwelle.

3. Steuerungsvorrichtung für einen Verbrennungsmotor mit einer Ladedruckerhöhungsvorrichtung nach Anspruch 1, wobei
die Ladedruckzustand-Bestimmungseinheit bestimmt, ob der Ist-Ladedruck mindestens so hoch ist wie der Soll-Ladedruck, während der Öffnungsgrad des Abgasströmungsraten-Regelventils in den vollständig geschlossenen Zustand versetzt ist und eine Differenz zwischen dem Ist-Ladedruck und dem Soll-Ladedruck größer ist als eine Schwelle, und die Ventilöffnungs-Freigabeeinheit den Öffnungsgrad des Abgasströmungsraten-Regelventils in der Öffnungsrichtung aus dem vollständig geschlossenen Zustand ändert, wenn der Ist-Ladedruck mindestens so hoch ist wie der Soll-Ladedruck, während der Öffnungsgrad des Abgasströmungsraten-Regelventils in den vollständig geschlossenen Zustand versetzt ist und die Differenz zwischen dem Ist-Ladedruck und dem Soll-Ladedruck größer ist als die Schwelle.

4. Steuerungsvorrichtung für einen Verbrennungsmotor mit einer Ladedruckerhöhungsvorrichtung nach einem der Ansprüche 1 bis 3, **dadurch gekennzeichnet, dass** sie des Weiteren Folgendes umfasst:
eine Verbrennungsmotorzustand-Bestimmungseinheit, die bestimmt, ob eine Motordrehzahl und eine Kraftstoffeinspritzmenge des Verbrennungsmotors größer sind als Schwellen,
wobei, wenn der Ist-Ladedruck mindestens so hoch ist wie der Soll-Ladedruck, während der Öffnungsgrad des Abgasströmungsraten-Regelventils in den vollständig geschlossenen Zustand versetzt ist, für den Fall, dass die Motordrehzahl und die Kraftstoffeinspritzmenge des Verbrennungsmotors größer sind als die Schwellen, der Öffnungsgrad des Abgasströmungsraten-Regelventils in der Öffnungsrichtung aus dem vollständig geschlossenen Zustand geändert wird.

5. Steuerungsvorrichtung für einen Verbrennungsmotor mit einer Ladedruckerhöhungsvorrichtung (3), die Folgendes umfasst:
eine Hochdruckstufen-Ladedruckerhöhungsvorrichtung (3a), die eine Hochdruckstufen-Turbine (321) umfasst, die durch Abgas angetrieben wird, das durch einen Abgaspfad (2b) des Verbrennungsmotors (2) strömt, und den Verbrennungsmotor (2) mit Luft, die durch einen Ansaugpfad (2a) strömt, unter Verwendung eines Hochdruckstufenverdichters (312), der mit der Hochdruckstufen-Turbine (321) gekoppelt ist, auflädt;
eine Niederdruckstufen-Ladedruckerhöhungsvorrichtung (3b), die eine Niederdruckstufen-Turbine (322) umfasst, die in einem Abgaspfad stromabwärts der Hochdruckstufen-Turbine (321) angeordnet ist und den Verbrennungsmotor mit Luft, die durch einen Ansaugpfad stromaufwärts des Hochdruckstufenverdichters (312) strömt, unter Verwendung eines Niederdruckstufenverdichters (311), der mit der Niederdruckstufen-Turbine (322) gekoppelt ist, auflädt; und
ein Hochdruckstufen-Wastegate-Ventil (321b), das in einem Umgehungspfad für Abgas angeordnet ist, das durch die Hochdruckstufen-Turbine (321) strömt; und ein Niederdruckstufen-Wastegate-Ventil (322a), das in einem Umgehungspfad für Abgas angeordnet ist, das durch die Niederdruckstufen-Turbine (322) strömt; wobei die Steuerungsvorrichtung Folgendes umfasst:
eine Ladedrucksteuereinheit (110), die auf der Grundlage eines physikalischen Modells, das einen
Ventilverengungsausdruck und einen
Umwandlungseffizienzausdruck für die Turbinen und die Verdichter des Verbrennungsmotors mit einer Ladedruckerhöhungsvorrichtung umfasst, eines von Folgendem auswählt: einen Zweistufenmodus zum Antreiben der Hochdruckstufen-Turbine (321) und der Niederdruckstufen-Turbine (322), indem ein Öffnungsgrad des Hochdruckstufen-Wastegate-Ventils (321a) verändert wird, während ein Öffnungsgrad des Niederdruckstufen-Wastegate-Ventils (322a) vollständig geschlossen ist; oder einen Einstufenmodus zum Antreiben der Niederdruckstufen-Turbine (322), indem der Öffnungsgrad des Niederdruckstufen-Wastegate-Ventils (322a) verändert wird, während der Öffnungsgrad des Hochdruckstufen-Wastegate-Ventils (321a) vollständig geöffnet ist, und Verstellen eines Ladedrucks zum Aufladen des Verbrennungsmotors (2) mit Luft auf einen Soll-Ladedruck, wobei die Ladedrucksteuereinheit (110) den Zweistufenmodus bei zwangsweise vollständig geschlossenem Öffnungsgrad des Niederdruckstufen-Wastegate-Ventils (322a) auswählt, wenn sie in Reaktion auf eine Veränderung einer Gaspedalposition, mit der eine Beschleunigung angewiesen wird, fälschlicherweise auf der Basis des physikalischen Modells bestimmt, dass der Ladedruck den Soll-Ladedruck nicht erreichen kann, sofern nicht der Hochdruckstufen-Turbolader (3a) arbeitet, wenn im Fall eines Teillastbereichs die auf der Basis des Modells geschätzte Rotationsfrequenz der Turbine kleiner ist als ein Sollwert und die Differenz zwischen der Rotationsfrequenz und dem Sollwert größer ist als die Schwelle;
eine Ladedruckzustand-Bestimmungseinheit (130b), die bestimmt, ob der in dem ausgewählten Zweistufenmodus gesteuerte Ist-Ladedruck mindestens so hoch ist wie der Soll-Ladedruck; und
eine Betriebsmodusumschalteinheit (160), welche die Ladedrucksteuereinheit (110) anweist, ein Umschalten von dem Zweistufenmodus zu dem Einstufenmodus auszuführen, wenn der in dem Zweistufenmodus gesteuerte Ist-Ladedruck mindestens so hoch ist wie der Soll-Ladedruck.

6. Steuerungsvorrichtung für einen Verbrennungsmotor mit einer Ladedruckerhöhungsvorrichtung nach Anspruch 5, wobei
die Ladedruckzustand-Bestimmungseinheit bestimmt, ob der in dem Zweistufenmodus gesteuerte Ist-Ladedruck mindestens so hoch ist wie der Soll-Ladedruck und eine zunehmende Rate, mit welcher der Ladedruck zunimmt, größer ist als eine Schwelle, und
die Betriebsmodusumschalteinheit die Ladedrucksteuereinheit anweist, das Umschalten von dem Zweistufenmodus zu dem Einstufenmodus auszuführen, wenn der in dem Zweistufenmodus gesteuerte Ist-Ladedruck mindestens so hoch ist wie der Soll-Ladedruck und die zunehmende Rate, mit welcher der Ist-Ladedruck steigt, größer ist als die Schwelle.

7. Steuerungsvorrichtung für einen Verbrennungsmotor mit einer Ladedruckerhöhungsvorrichtung nach Anspruch 5, wobei
die Ladedruckzustand-Bestimmungseinheit bestimmt, ob der in dem Zweistufenmodus gesteuerte Ist-Ladedruck mindestens so hoch ist wie der Soll-Ladedruck und eine Differenz zwischen dem Ist-Ladedruck und dem Soll-Ladedruck größer ist als eine Schwelle, und
die Ventilöffnungs-Freigabeeinheit die Ladedrucksteuereinheit anweist, ein Umschalten von dem Zweistufenmodus zu dem Einstufenmodus auszuführen, wenn der in dem Zweistufenmodus gesteuerte Ist-Ladedruck mindestens so hoch ist wie der Soll-Ladedruck und die Differenz zwischen dem Ist-Ladedruck und dem Soll-Ladedruck größer ist als die Schwelle.

8. Steuerungsvorrichtung für einen Verbrennungsmotor mit einer Ladedruckerhöhungsvorrichtung nach einem der Ansprüche 5 bis 7, **dadurch gekennzeichnet, dass** sie des Weiteren Folgendes umfasst:
eine Verbrennungsmotorzustand-Bestimmungseinheit, die bestimmt, ob eine Motordrehzahl und eine
Kraftstoffeinspritzmenge des Verbrennungsmotors größer sind als Schwellen,
wobei, wenn der in dem Zweistufenmodus gesteuerte Ist-Ladedruck mindestens so hoch ist wie der Soll-Ladedruck, für den Fall, dass die Motordrehzahl und die
Kraftstoffeinspritzmenge des Verbrennungsmotors größer sind als die Schwellen, die Ladedrucksteuereinheit angewiesen wird, das Umschalten von dem Zweistufenmodus zu dem Einstufenmodus auszuführen.

9. Verfahren zum Steuern eines Verbrennungsmotors mit einer Ladedruckerhöhungsvorrichtung, die eine Turbine umfasst, die durch Abgas angetrieben wird, das durch einen Abgaspfad des Verbrennungsmotors strömt, und den Verbrennungsmotor mit Luft, die durch einen Ansaugpfad strömt, unter Verwendung eines Verdichters, der mit dem Turbine gekoppelt ist, auflädt, wobei das Verfahren folgende Schritte umfasst:
Verstellen eines Ladedrucks zum Aufladen des Verbrennungsmotors mit Luft auf einen Soll-Ladedruck, indem ein Öffnungsgrad eines Abgasströmungsraten-Regelventils, das eine Strömungsrate des Abgases verstellt, das durch den Abgaspfad strömt, auf der Grundlage eines physikalischen Modells, das einen Ventilverengungsausdruck und einen Umwandlungseffizienzausdruck für die Turbine und die Verdichter des Verbrennungsmotors mit einer Ladedruckerhöhungsvorrichtung umfasst, verändert wird, wobei das Verstellen, das durch eine Ladedrucksteuereinheit (110) in Reaktion auf eine Veränderung der Gaspedalposition, mit der eine Beschleunigung angewiesen wird, ausgeführt wird,
zwangsweise das Abgasströmungsraten-Regelventil kontinuierlich vollständig schließt, wenn sie auf der Basis des physikalischen Modells bestimmt, dass der Ladedruck nicht sofort den Soll-Ladedruck erreichen kann, sofern nicht das Abgasströmungsraten-Regelventil vollständig geschlossen ist, wenn im Fall eines Teillastbereichs die auf der Basis des Modells geschätzte Rotationsfrequenz der Turbine kleiner ist als ein Sollwert und die Differenz zwischen der Rotationsfrequenz und dem Sollwert größer ist als eine Schwelle;
Bestimmen, ob ein Ist-Ladedruck mindestens so hoch ist wie der Soll-Ladedruck, wenn der Öffnungsgrad des Abgasströmungsraten-Regelventils in einen vollständig geschlossenen Zustand versetzt ist; und
Ändern des Öffnungsgrades des Abgasströmungsraten-Regelventils in einer Öffnungsrichtung aus dem vollständig geschlossenen Zustand, wenn der Ist-Ladedruck mindestens so hoch ist wie der Soll-Ladedruck, während der Öffnungsgrad des Abgasströmungsraten-Regelventils in den vollständig geschlossenen Zustand versetzt ist.

10. Verfahren zum Steuern eines Verbrennungsmotors mit einer Ladedruckerhöhungsvorrichtung, die Folgendes umfasst: eine Hochdruckstufen-Ladedruckerhöhungsvorrichtung, die eine Hochdruckstufen-Turbine umfasst, die durch Abgas angetrieben wird, das durch einen Abgaspfad des Verbrennungsmotors strömt, und den Verbrennungsmotor mit Luft, die durch einen Ansaugpfad strömt, unter Verwendung eines Hochdruckstufenverdichters, der mit der Hochdruckstufen-Turbine gekoppelt ist, auflädt; eine Niederdruckstufen-Ladedruckerhöhungsvorrichtung, die eine Niederdruckstufen-Turbine umfasst, die in einem Abgaspfad stromabwärts der Hochdruckstufen-Turbine angeordnet ist und den Verbrennungsmotor mit Luft, die durch einen Ansaugpfad stromaufwärts des Hochdruckstufenverdichters strömt, unter Verwendung eines Niederdruckstufenverdichters, der mit der Niederdruckstufen-Turbine gekoppelt ist, auflädt; und ein Hochdruckstufen-Wastegate-Ventil, das in einem Umgehungspfad für Abgas, das durch die Hochdruckstufen-Turbine strömt, angeordnet ist; und ein Niederdruckstufen-Wastegate-Ventil, das in einem Umgehungspfad für Abgas angeordnet ist, das durch die Niederdruckstufen-Turbine strömt, wobei das Verfahren folgende Schritte umfasst:
Auswählen, auf der Grundlage eines physikalischen Modells, das einen Ventilverengungsausdruck und einen Umwandlungseffizienzausdruck für die Turbinen und die Verdichter des Verbrennungsmotors mit einer Ladedruckerhöhungsvorrichtung, umfasst, eines Zweistufenmodus zum Antreiben der Hochdruckstufen-Turbine und der Niederdruckstufen-Turbine, indem ein Öffnungsgrad des Hochdruckstufen-Wastegate-Ventils verändert wird, während ein Öffnungsgrad des Niederdruckstufen-Wastegate-Ventils vollständig geschlossen ist, oder eines Einstufenmodus zum Antreiben der Niederdruckstufen-Turbine, indem der Öffnungsgrad des Niederdruckstufen-Wastegate-Ventils verändert wird, während der Öffnungsgrad des Hochdruckstufen-Wastegate-Ventils vollständig geöffnet ist, und Verstellen eines Ladedrucks zum Aufladen des Verbrennungsmotors mit Luft auf einen Soll-Ladedruck, wobei das Auswählen, das durch eine Ladedrucksteuereinheit (110) ausgeführt wird, den Zweistufenmodus bei zwangsweise vollständig geschlossenem Öffnungsgrad des Niederdruckstufen-Wastegate-Ventils (322a) auswählt, wenn sie in Reaktion auf eine Veränderung einer Gaspedalposition, mit der eine Beschleunigung angewiesen wird, fälschlicherweise auf der Basis des physikalischen Modells bestimmt, dass der Ladedruck den Soll-Ladedruck nicht erreichen kann, sofern nicht der Hochdruckstufen-Turbolader (3a) arbeitet, wenn im Fall eines Teillastbereichs die auf der Basis des Modells geschätzte Rotationsfrequenz der Turbine kleiner ist als ein Sollwert und die Differenz zwischen der Rotationsfrequenz und dem Sollwert größer ist als die Schwelle;
Bestimmen, ob der in dem ausgewählten Zweistufenmodus gesteuerte Ist-Ladedruck mindestens so hoch ist wie der Soll-Ladedruck; und
Ausführen eines Umschaltens von dem Zweistufenmodus zu dem Einstufenmodus zum Verstellen des Ladedrucks zu dem Soll-Ladedruck, wenn der in dem Zweistufenmodus gesteuerte Ist-Ladedruck mindestens so hoch ist wie der Soll-Ladedruck.

## Revendications

1. Appareil de commande pour un moteur à combustion interne (2) avec un suralimenteur (3) comprenant une turbine (321, 322) entraînée par des gaz d'échappement circulant dans un chemin d'échappement (2b) du moteur à combustion interne et suralimentant le moteur à combustion interne (2) avec de l'air circulant dans un chemin d'admission (2a) en utilisant un compresseur (311, 312) couplé à la turbine (321, 322), l'appareil de commande comprenant :
une unité de commande de pression de suralimentation (110) ajustant une pression de suralimentation pour suralimenter le moteur à combustion interne (2) avec de l'air à une pression de suralimentation cible en modifiant un degré d'ouverture d'une soupape de régulation de débit d'échappement (321a, 321b, 322a) ajustant un débit du gaz d'échappement circulant dans le chemin d'échappement (2b) sur la base d'un modèle physique comprenant une expression de restriction de soupape et une expression de rendement de conversion pour la turbine et le compresseur du moteur à combustion interne avec un suralimenteur (3), l'unité de commande de pression de suralimentation (110), en réponse à une modification de la position de la pédale d'accélérateur dans laquelle une accélération est demandée, fermant complètement de force la soupape de régulation du débit d'échappement de façon continue lorsqu'elle détermine, sur la base du modèle physique, que la pression de suralimentation ne peut atteindre immédiatement la pression de suralimentation cible que si la soupape de régulation du débit d'échappement est complètement fermée lorsque, dans le cas d'une zone de charge médiane, la fréquence de rotation de la turbine estimée sur la base du modèle est inférieure à une valeur cible et la différence entre la fréquence de rotation et la valeur cible est supérieure à un seuil ;
une unité de détermination d'état de pression de suralimentation (130a) déterminant si une pression de suralimentation réelle est égale ou supérieure à la pression de suralimentation cible lorsque le degré d'ouverture de la soupape de régulation de débit d'échappement (321a, 321b, 322a) est mis à un état de fermeture complète ; et
une unité de déclenchement d'ouverture de soupape (150) modifiant le degré d'ouverture de la soupape de régulation de débit d'échappement (321a, 321b, 322a) dans un sens d'ouverture à partir de l'état de fermeture complète lorsque la pression de suralimentation réelle est égale ou supérieure à la pression de suralimentation cible lorsque le degré d'ouverture de la soupape de régulation du débit d'échappement (321a, 321b, 322a) est mis à l'état de fermeture complète.

2. Appareil de commande pour un moteur à combustion interne avec un suralimenteur selon la revendication 1,
dans lequel l'unité de détermination de l'état de pression de suralimentation détermine si la pression de suralimentation réelle est égale ou supérieure à la pression de suralimentation cible avec le degré d'ouverture de la soupape de régulation de débit d'échappement mis à l'état de fermeture complète et si un vitesse d'augmentation à laquelle la pression de suralimentation réelle augmente est supérieure à un seuil, et
l'unité de déclenchement d'ouverture de soupape modifie le degré d'ouverture de la soupape de régulation du débit d'échappement dans le sens d'ouverture à partir de l'état de fermeture complète lorsque la pression de suralimentation réelle est égale ou supérieure à la pression de suralimentation cible avec le degré d'ouverture de la soupape de régulation de débit d'échappement mis à l'état de fermeture complète et que la vitesse d'augmentation à laquelle la pression de suralimentation réelle augmente est supérieure à un seuil.

3. Appareil de commande pour un moteur à combustion interne avec un suralimenteur selon la revendication 1,
dans lequel l'unité de détermination de l'état de pression de suralimentation détermine si la pression de suralimentation réelle est égale ou supérieure à la pression de suralimentation cible avec le degré d'ouverture de la soupape de régulation de débit d'échappement mis à l'état de fermeture complète et si une différence entre la pression de suralimentation réelle et la pression de suralimentation cible est supérieure à un seuil, et
l'unité de déclenchement d'ouverture de soupape modifie le degré d'ouverture de la soupape de régulation du débit d'échappement dans le sens d'ouverture à partir de l'état de fermeture complète lorsque la pression de suralimentation réelle est égale ou supérieure à la pression de suralimentation cible avec le degré d'ouverture de la soupape de régulation de débit d'échappement mis à l'état de fermeture complète et que la différence entre la pression de suralimentation réelle et la pression de suralimentation cible est supérieure au seuil.

4. Appareil de commande pour un moteur à combustion interne avec un suralimenteur selon l'une quelconque des revendications 1 à 3, **caractérisé en ce qu'**il comprend en outre :
une unité de détermination d'état de moteur à combustion interne déterminant si une vitesse de moteur et une quantité d'injection de carburant du moteur à combustion interne sont supérieures à des seuils,
dans lequel, lorsque la pression de suralimentation réelle est égale ou supérieure à la pression de suralimentation cible avec le degré d'ouverture de la soupape de régulation de débit d'échappement mis à l'état de fermeture complète, si la vitesse de moteur et la quantité d'injection de carburant du moteur à combustion interne sont supérieures aux seuils, le degré d'ouverture de la soupape de régulation du débit d'échappement est modifié dans le sens d'ouverture à partir de l'état de fermeture complète.

5. Appareil de commande pour un moteur à combustion interne avec un suralimenteur (3a) comprenant un suralimenteur à étage haute pression (3a) comprenant une turbine à étage haute pression (321) entraînée par des gaz d'échappement circulant dans un circuit d'échappement (2b) du moteur à combustion interne (2) et suralimentant le moteur à combustion interne (2) avec de l'air circulant dans un chemin d'admission (2a) en utilisant un compresseur à étage haute pression (312) couplé à la turbine à étage haute pression (321), un suralimenteur à étage basse pression (3b) comprenant une turbine à étage basse pression (322) placée dans un chemin d'échappement en aval de la turbine à étage haute pression (321) et suralimentant le moteur à combustion interne avec de l'air circulant dans un chemin d'admission en amont du compresseur à étage haute pression (312) en utilisant un compresseur à étage basse pression (311) couplé à la turbine à étage basse pression (322), et une soupape de décharge à étage à haute pression (321b) placée dans un chemin de dérivation pour les gaz d'échappement circulant dans la turbine à étage à haute pression (321), et une soupape de décharge à étage basse pression (322a) placée dans un chemin de dérivation pour les gaz d'échappement circulant dans la turbine à étage basse pression (322), l'appareil de commande comprenant :
une unité de commande de pression de suralimentation (110) sélectionnant, sur la base d'un modèle physique comprenant une expression de restriction de soupape et une expression de rendement de conversion pour les turbines et les compresseurs du moteur à combustion interne avec un suralimenteur, l'un d'un mode à deux étages pour entraîner la turbine à étage haute pression (321) et la turbine à étage basse pression (322) en modifiant le degré d'ouverture de la soupape de décharge à étage haute pression (321a) tout en fermant complètement un degré d'ouverture de la soupape de décharge à étage basse pression (322a), et d'un mode à un seul étage pour entraîner la turbine à étage basse pression (322) en modifiant le degré d'ouverture de la soupape de décharge à étage basse pression (322a) tout en ouvrant complètement le degré d'ouverture de la soupape de décharge à étage haute pression (321a) et en ajustant une pression de suralimentation pour suralimenter le moteur à combustion interne (2) avec de l'air à une pression de suralimentation cible, dans lequel l'unité de commande de pression de suralimentation (110) sélectionne le mode à deux étages avec le degré d'ouverture complètement fermée de force de la soupape de décharge à étage basse pression (322a) lorsque, en réponse à une modification de position de la pédale d'accélérateur dans laquelle l'accélération est demandée, elle détermine à tort, sur la base du modèle physique, que la pression de suralimentation ne peut atteindre la pression suralimentation cible que si le suralimenteur à étage haute pression (3a) fonctionne lorsque, dans le cas d'une zone de charge médiane, la fréquence de rotation de la turbine estimée sur la base du modèle est inférieure à une valeur cible et la différence entre la fréquence de rotation et la valeur cible est supérieure au seuil ;
une unité de détermination d'état de pression de suralimentation (130b) déterminant si la pression de suralimentation réelle commandée dans le mode à deux étages sélectionné est égale ou supérieure à la pression de suralimentation cible ; et une unité de commutation de mode de fonctionnement (160) ordonnant à l'unité de commande de pression de suralimentation (110) de passer du mode à deux étages au mode à un étage lorsque la pression de suralimentation réelle commandée dans le mode à deux étages est égale ou supérieure à la pression de suralimentation cible.

6. Appareil de commande pour un moteur à combustion interne avec un suralimenteur selon la revendication 5,
dans lequel l'unité de détermination d'état de pression de suralimentation détermine si la pression de suralimentation réelle commandée dans le mode à deux étages est égale ou supérieure à la pression de suralimentation cible et si une vitesse d'augmentation à laquelle la pression de suralimentation augmente est supérieure à un seuil, et l'unité de commutation de mode de fonctionnement ordonne à l'unité de commande de pression de suralimentation d'effectuer la commutation du mode à deux étages au mode à un étage lorsque la pression de suralimentation réelle commandée dans le mode à deux étages est égale ou supérieure à la pression de suralimentation cible et que la vitesse d'augmentation à laquelle la pression de suralimentation réelle augmente est supérieure au seuil.

7. Appareil de commande pour un moteur à combustion interne avec un suralimenteur selon la revendication 5,
dans lequel l'unité de détermination d'état de pression de suralimentation détermine si la pression de suralimentation réelle commandée dans le mode à deux étages est supérieure ou égale à la pression de suralimentation cible et si une différence entre la pression de suralimentation réelle et la pression de suralimentation cible est supérieure à un seuil, et
l'unité de déclenchement d'ouverture de soupape ordonne à l'unité de commande de pression de suralimentation de passer du mode à deux étages au mode à un étage lorsque la pression de suralimentation réelle commandée dans le mode à deux étages est égale ou supérieure à la pression de suralimentation cible et que la différence entre la pression de suralimentation réelle et la pression de suralimentation cible est supérieure au seuil.

8. Appareil de commande pour un moteur à combustion interne avec un suralimenteur selon l'une quelconque des revendications 5 à 7, **caractérisé en ce qu'**il comprend en outre :
une unité de détermination d'état de moteur à combustion interne déterminant si une vitesse de moteur et une quantité d'injection de carburant du moteur à combustion interne sont supérieures à des seuils,
dans lequel, lorsque la pression de suralimentation réelle commandée dans le mode à deux étages est égale ou supérieure à la pression de suralimentation cible, si la vitesse du moteur et la quantité d'injection de carburant du moteur à combustion interne sont supérieures aux seuils, l'unité de commande de pression de suralimentation reçoit l'ordre d'effectuer la commutation du mode à deux étages au mode à un seul étage.

9. Procédé de commande d'un moteur à combustion interne avec un suralimenteur comprenant une turbine entraînée par des gaz d'échappement circulant dans un chemin d'échappement du moteur à combustion interne et suralimentant le moteur à combustion interne avec de l'air circulant dans un circuit d'admission en utilisant un compresseur couplé à la turbine, procédé comprenant les étapes consistant à :
ajuster une pression de suralimentation pour suralimenter le moteur à combustion interne avec de l'air à une pression de suralimentation cible en modifiant le degré d'ouverture d'une soupape de régulation de débit d'échappement ajustant un débit des gaz d'échappement circulant dans le chemin d'échappement sur la base d'un modèle physique comprenant une expression de restriction de soupape et une expression de rendement de conversion pour la turbine et le compresseur du moteur à combustion interne avec un suralimenteur, l'ajustement, effectué par une unité de commande de pression de suralimentation (110), en réponse à une modification de la position de la pédale d'accélérateur dans laquelle l'accélération est demandée, fermant de force complètement la soupape de régulation du débit d'échappement de façon continue lorsqu'elle détermine, sur la base du modèle physique, que la pression de suralimentation ne peut atteindre immédiatement la pression de suralimentation cible que si la soupape de régulation du débit d'échappement est complètement fermée lorsque, dans le cas d'une zone de charge médiane, la fréquence de rotation de la turbine estimée sur la base du modèle est inférieure à une valeur cible et la différence entre la fréquence de rotation et la valeur cible est supérieure à un seuil ;
déterminer si une pression de suralimentation réelle est égale ou supérieure à la pression de suralimentation cible lorsque le degré d'ouverture de la soupape de régulation de débit d'échappement est mis à un état de fermeture complète ; et
modifier le degré d'ouverture de la soupape de régulation du débit d'échappement dans un sens d'ouverture à partir de l'état de fermeture complète lorsque la pression de suralimentation est égale ou supérieure à la pression de suralimentation cible lorsque le degré d'ouverture de la soupape de régulation de débit d'échappement est mis à l'état de fermeture complète.

10. Procédé de commande d'un moteur à combustion interne avec un suralimenteur comprenant un suralimenteur à étage haute pression comprenant une turbine à étage haute pression entraînée par des gaz d'échappement circulant dans un chemin d'échappement du moteur à combustion interne et suralimentant le moteur à combustion interne avec de l'air circulant dans un chemin d'admission en utilisant un compresseur à étage haute pression couplé à la turbine à étage haute pression, un suralimenteur à étage basse pression comprenant une turbine à étage basse pression placée dans un chemin d'échappement en aval de la turbine à étage haute pression et suralimentant le moteur à combustion interne avec de l'air circulant dans un chemin d'admission en amont du compresseur à étage haute pression en utilisant un compresseur à étage basse pression couplé à la turbine à étage basse pression, et une soupape de décharge à étage haute pression placée dans un chemin de dérivation pour les gaz d'échappement circulant dans la turbine à étage haute pression, et une soupape de décharge à étage basse pression placée dans un chemin de dérivation pour les gaz d'échappement circulant dans la turbine à étage basse pression, le procédé comprenant les étapes consistant à :
sélectionner, sur la base d'un modèle physique comprenant une expression de restriction de soupape et une expression de rendement de conversion pour les turbines et les compresseurs du moteur à combustion interne avec un suralimenteur, l'un d'un mode à deux étages pour entraîner la turbine à étage haute pression et la turbine à étage basse pression en modifiant le degré d'ouverture de la soupape de décharge à étage haute pression tout en fermant complètement un degré d'ouverture de la soupape de décharge à étage basse pression, et d'un mode à un seul étage pour entraîner la turbine à étage basse pression en modifiant le degré d'ouverture de soupape de décharge à étage basse pression tout en ouvrant complètement le degré d'ouverture de la soupape de décharge à étage haute pression et en ajustant une pression de suralimentation pour suralimenter le moteur à combustion interne avec de l'air à une pression de suralimentation cible, dans lequel la sélection, effectuée par une unité de commande de pression de suralimentation (110), sélectionne le mode à deux étages avec le degré d'ouverture complètement fermée de force de la soupape de décharge à étage basse pression (322a) lorsque, en réponse à une modification de position de la pédale d'accélérateur dans laquelle l'accélération est demandée, elle détermine à tort, sur la base du modèle physique que la pression de suralimentation ne peut atteindre la pression de suralimentation cible que si le suralimenteur à étage haute pression (3a) fonctionne, lorsque, dans le cas d'une zone de charge médiane, la fréquence de rotation de la turbine estimée sur la base du modèle est inférieure à une valeur cible et la différence entre la fréquence de rotation et la valeur cible est supérieure au seuil ;
déterminer si la pression de suralimentation réelle commandée dans le mode à deux étages sélectionné est égale ou supérieure à la pression de suralimentation cible ; et
effectuer la commutation du mode à deux étages au mode à un seul étage pour ajuster la pression de suralimentation à la pression de suralimentation cible lorsque la pression de suralimentation réelle commandée dans le mode à deux étages est égale ou supérieure à la pression de suralimentation cible.
